# FASCICULE DE BREVET EUROPEEN

(11) **EP 3 297 742 B1**
(45) Date de publication et mention de la délivrance du brevet: **01.01.2020**
(21) Numéro de dépôt: 16731215.6
(22) Date de dépôt: 19.05.2016
(51) Int. Cl.: B01D 21/26, B04C 5/081, B04C 5/13, B04C 5/14, C02F 11/12, C02F 11/14, E21B 21/06, C02F 1/52, C02F 1/56

(54) **SYSTÈME DE TRAITEMENT D'UNE BOUE DE FORAGE ET PROCEDE CORRESPONDANT**
ANLAGE ZUR BEHANDLUNG VON BOHRSCHLAMM UND ENTSPRECHENDES VERFAHREN
SYSTEM FOR TREATING A DRILLING MUD AND CORRESPONDING METHOD

(30) Priorité: 20.05.2015 FR 1554508
(43) Date de publication de la demande: 28.03.2018
(73) Titulaire: Soletanche Freyssinet, 92500 Rueil Malmaison (FR)
(72) Inventeur: JUSTINO, Christophe, 92500 Rueil Malmaison (FR); AUVRAY, Christian, 92500 Rueil Malmaison (FR); JANNEAU, Brice, 92500 Rueil Malmaison (FR)
(74) Mandataire: Cabinet Beau de Loménie
(86) Numéro de dépôt international: PCT/FR2016/051194
(87) Numéro de publication internationale: WO 2016/189232

(56) Documents cités:
- CN-B- 103 288 324
- FR-A1- 2 875 495
- JP-A- 2005 205 251
- US-A- 5 422 012

## Description

### Arrière-plan de l'invention

La présente invention concerne une unité de traitement de boue de forage, et un procédé de traitement correspondant.

L'unité de traitement et le procédé de traitement selon l'invention sont particulièrement adaptés au traitement de boues de forage du type utilisé dans les travaux de fondations profondes telles que des parois moulées, des barrettes ou des pieux, ainsi que dans les domaines du forage horizontale dirigé et des tunnels.

Pendant une opération de forage, la stabilité de l'excavation ou du front de taille est obtenue en remplissant celle-ci de boue de forage. La boue forme sur les parois de l'excavation un dépôt étanche, qui peut être appelé « cake », qui permet de limiter la percolation dans le terrain dans le terrain et empêche l'éboulement des parois. Lorsque la profondeur de l'excavation a atteint le niveau désiré, l'excavation est progressivement remplie de béton, en commençant au-dessous de la boue dans le bas de l'excavation.

Au cours de son utilisation, la boue de forage voit ses qualités altérées au contact du sol jusqu'à la rendre impropre à l'utilisation. Sa densité croît inévitablement au cours du creusement, du fait de l'apport de déblais. Or, une densité excessive limite le rendement d'excavation, empêche un transport satisfaisant des déblais de forage, et altère l'efficacité de l'outil de forage.

Pour conserver une boue de forage toujours conforme aux exigences du forage, il est indispensable de la traiter en permanence pour en extraire les particules les plus grosses, généralement de diamètre supérieur à 80 microns. On parle de « dessablage » de la boue de forage. Cependant, après deux ou trois cycles de traitement, ses qualités sont trop dégradées pour qu'elle puisse encore être utilisée. Il faut alors travailler avec une boue neuve et gérer les stocks de boues de forage non réutilisables.

Pour des raisons de protection de l'environnement, la réglementation dans un nombre croissant de territoires à travers le monde n'accepte plus que les boues de forage usées soient rejetées sous forme liquide. En conséquence, il a fallu développer des procédés de séparation et déshydratation des boues pour les rendre pelletables (i.e. transportables, non-liquéfiable sous l'effet de vibrations ou de contraintes de cisaillement), avant leur envoi en décharge. Or, les boues de forage se caractérisent typiquement par une très grande stabilité et homogénéité. La combinaison d'une taille de particules très fines, avec un diamètre médian inférieur à 100 µm, voire 80 µm, voire même 20 µm dans la plupart des cas, associée à la présence d'agents stabilisants comme certaines argiles ou polymères organiques hydrosolubles leur confèrent une très forte résistance spécifique à la filtration et une aptitude quasi nulle à la séparation solide - liquide. Particulièrement les boues de forages à base de bentonite présentent une stabilité et une résistance forte à la décantation/sédimentation du fait de leur caractère thixotrope.

Ainsi, pour effectuer cette séparation sur des boues de forage en vue d'obtenir un produit de traitement solide pelletable, des procédés de séparation solide-liquide complexes ont été proposés utilisant par exemple des décanteurs centrifuges comprenant un carter tournant et, à l'intérieur de ce carter, une vis d'extraction tournant dans le même sens mais à une vitesse différente. Sous l'effet de la force centrifuge, les particules solides denses de la boue sont poussées vers la paroi du carter puis acheminées vers une première sortie du décanteur, et le liquide reste dans la partie centrale d'où il est acheminé vers une seconde sortie du décanteur. De tels décanteurs centrifuges présentent l'inconvénient d'être très couteux et, par ailleurs, très encombrants.

Dans la publication de demande de brevet français FR 2 875 495 A1, une unité et un procédé de traitement de boues ont été décrits utilisant un hydrocyclone pour une séparation solide - liquide. Toutefois, cette divulgation concernait le traitement des boues rouges issues du procédé Bayer de fabrication de trihydrate d'alumine, et non pas celui de boues de forage. Quoique ces boues rouges présentent, comme les boues de forage, une granulométrie très fine, elles n'incorporent pas d'agents stabilisants tels que ceux qui rendent particulièrement difficile la séparation solide-liquide des boues de forage. D'autres systèmes et procédés de séparation cyclonique sont décrits dans les documents CN 103 288 324 B, JP 2005-205251 A et US 5 422 012 A.

### Objet et résumé de l'invention

Un but de l'invention est de proposer un système de traitement de boue de forage et un procédé correspondant, qui remédient aux inconvénients de l'art antérieur précités.

En particulier, un but de l'invention est de proposer un système avec une unité de traitement de boue de forage qui soit peu couteuse et peu encombrante, ainsi qu'un procédé de traitement de boue de forage économique et facile à mettre en œuvre.

Ce but est atteint avec un système de traitement d'une boue de forage, comprenant des moyens pour coaguler une boue de forage permettant d'obtenir une boue de forage coagulée, ainsi qu'une unité de traitement d'une boue de forage, comprenant :
- un conduit primaire d'alimentation en boue de forage coagulée,
- un système de floculation en ligne de la boue de forage coagulée circulant dans le conduit primaire, et
- au moins un hydrocyclone alimenté par le conduit primaire et disposé en aval du système de floculation, l'hydrocyclone comprenant un orifice de surverse destiné à recueillir un produit de traitement liquide de la boue de forage et un orifice de sousverse destiné à recueillir un produit de traitement solide de la boue de forage, l'orifice de surverse présentant un diamètre de surverse et l'orifice de sousverse présentant un diamètre de sousverse, et le diamètre de sousverse étant supérieur au diamètre de surverse, avec un rapport supérieur à 1,1, et compris entre 1,1 et 1,6, entre le diamètre de sousverse et le diamètre de surverse.

Comme il est bien connu en soi, un hydrocyclone est un dispositif qui utilise la force centrifuge pour séparer des particules solides en suspension liquide suivant leur taille. L'hydrocyclone présente normalement un carter principal de forme cylindro-conique qui est alimenté tangentiellement, sous-pression, et dispose de deux sorties : un orifice de surverse par où sortent habituellement les particules les plus fines et le liquide, et un orifice de sousverse par où sortent les particules grossières et une petite fraction de liquide. Les hydrocyclones connus sont typiquement utilisés comme classificateurs dans le dessablage des boues de forage, ou comme épaississeurs dans le domaine du traitement des eaux où ils servent à épaissir les boues organiques.

Les inventeurs ont mis en évidence qu'un rapport approprié entre le diamètre de l'orifice de surverse et le diamètre de l'orifice de sousverse, associé à un traitement physico-chimique de coagulation / floculation de la boue de forage, permet de modifier l'action de l'hydrocyclone pour obtenir, en sousverse, un produit de traitement solide pelletable à partir de boues de forage.

Par produit de traitement solide pelletable, on entend ici un produit dont la consistance solide en empêche l'écoulement, pour permettre ainsi son pelletage. Un tel produit ne présentera par exemple aucun écoulement mesurable dans un essai d'écoulement au cône de Marsh, tel que défini, par exemple, dans l'API Recommended Practice 13B-2. Ce produit de traitement solide peut être accompagné, en sousverse de l'hydrocyclone, par de l'eau libre pouvant en être facilement séparée, grâce à la consistance solide de ce produit de traitement solide, par gravité sur une simple grille.

Un produit de traitement liquide de la boue de forage est, au contraire, un produit dont l'écoulement liquide ne permet pas le pelletage, et est par contre mesurable par essai d'écoulement au cône de Marsh.

Selon un exemple, le conduit primaire d'alimentation peut être muni d'une pompe, et le système de floculation en ligne comprendre un conduit secondaire d'alimentation en agent floculant, ledit conduit secondaire étant alors relié au conduit primaire à une jonction située en aval de la pompe.

Selon un exemple, le système de floculation en ligne peut comprendre des moyens de mélange en ligne de la boue de forage coagulée et de l'agent floculant, prévus sur le conduit primaire en aval de la jonction. Ces moyens facilitent le mélange de l'agent floculant avec la boue de forage coagulée pour former la boue de forage floculée destinée à alimenter l'hydrocyclone.

Par exemple, les moyens de mélange peuvent comprendre un mélangeur statique. Un tel mélangeur garantit une bonne floculation en assurant un bon mélange de la boue de forage coagulée avec l'agent floculant tout en préservant les flocs formés par ce mélange.

Selon une disposition particulière, afin de permettre une arrivée rapide du mélange de boue de forage coagulée et d'agent floculant à l'hydrocyclone les moyens de mélange sont disposés à une distance de l'hydrocyclone, sur le conduit primaire, qui est inférieure à 5 mètres, de préférence inférieure à 2 mètres.

La présente invention concerne également un procédé de traitement d'une boue de forage, comprenant au moins la succession d'étapes suivantes :
- on alimente un conduit primaire d'alimentation en boue de forage préalablement coagulée,
- on réalise la floculation en ligne de ladite boue de forage coagulée circulant dans ledit conduit primaire,
- on introduit la boue de forage coagulée et floculée dans un hydrocyclone comprenant un orifice de surverse présentant un diamètre de surverse et un orifice de sousverse présentant un diamètre de sousverse, le diamètre de sousverse étant supérieur au diamètre de surverse, avec un rapport supérieur à 1,1, et compris entre 1,1 et 1,6, entre le diamètre de sousverse et le diamètre de surverse, et
- on décharge un produit de traitement solide de la boue de forage par l'orifice de sousverse et un produit de traitement liquide de la boue de forage par l'orifice de surverse.

Par ailleurs, de l'eau libre peut être déchargée, avec le produit de traitement solide, par l'orifice de sousverse.

La boue de forage peut notamment comprendre un agent stabilisateur tel que, par exemple, une argile smectique et/ou un polymère organique hydrosoluble. Parmi les argiles smectiques pouvant être utilisées comme agents stabilisateurs dans des telles boues de forage, on compte notamment diverses bentonites (bentonite sodique naturelle, bentonite sodique activée, bentonite sodo-calcique, ou bentonite calcique), la sépiolite et l'attapulgite. Pour leur utilisation comme agent stabilisateur de boue de forage, elles peuvent être incorporées à la boue de forage sous forme de poudres fines poudre fines, avec des particules de taille médiane inférieure à 100 µm et une teneur en eau pouvant être comprise entre 5 et 20 %. Parmi les polymères organiques hydrosolubles pouvant aussi être utilisés comme agents stabilisateurs dans ces boues de forage, on compte notamment les celluloses modifiées et leurs dérivés (carboxymethylcellulose, cellulose polyanionique, hydroxyethylcellulose), la gomme de xanthane, et la gomme de guar. Par ailleurs, la boue de forage peut être formée par une suspension aqueuse de particules ayant une taille médiane inférieure à 100 µm, voire 80 µm, voire même 20 µm dans la plupart des cas.

Selon un exemple, le produit de traitement solide peut présenter une siccité - ou pourcentage massique de matière solide - supérieure à 30 %.

Selon un exemple, le produit de traitement liquide peut être de l'eau comprenant moins de 600 mg par litre de matière en suspension.

Selon une disposition particulière, l'alimentation du conduit primaire peut être faite en régime turbulent.

### Brève description des dessins

L'invention sera mieux comprise à la lecture de la description détaillée faite ci-après, à titre indicatif mais non limitatif, en référence aux dessins annexés, sur lesquels :
- la figure 1 illustre schématiquement une unité de traitement de boue ;
- la figure 2A illustre schématiquement une vue de côté d'un hydrocyclone de l'unité de traitement de boue de forage de la figure 1 suivant un premier mode de réalisation ;
- la figure 2B illustre schématiquement une coupe longitudinale de l'hydrocyclone de la figure 2A ;
- la figure 3A illustre schématiquement une vue de côté d'un hydrocyclone de l'unité de traitement de boue de forage de la figure 1 suivant un deuxième mode de réalisation ; et
- la figure 3B illustre schématiquement une coupe longitudinale de l'hydrocyclone de la figure 3A.

### Description détaillée de l'invention

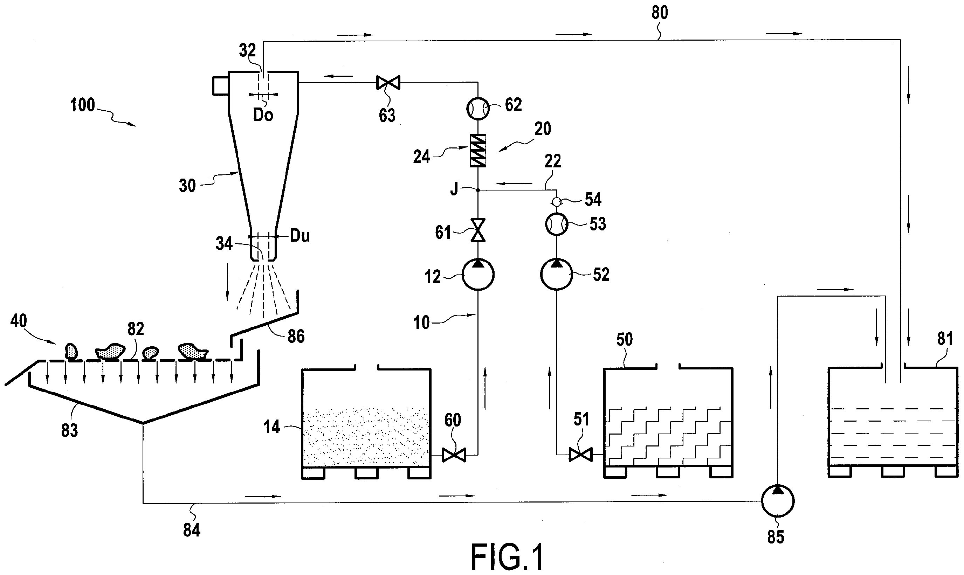

Sur la figure 1, on a représenté schématiquement une unité de traitement de boue de forage 100 selon un exemple de réalisation de l'invention.

L'unité de traitement 100 comprend ici :
- un conduit primaire 10 d'alimentation en boue de forage coagulée, relié à une cuve de stockage de boue de forage coagulée 14,
- un système de floculation en ligne 20 de la boue de forage coagulée circulant dans le conduit primaire 10, et
- un hydrocyclone 30 alimenté par le conduit primaire 10 et disposé en aval du système de floculation 20.

Le conduit primaire 10 est donc relié à une cuve 14 de stockage de boue de forage coagulée à l'une de ses extrémités, et à l'hydrocyclone 30 à une autre extrémité. Le conduit primaire 10 est par ailleurs relié, à travers une jonction notée J sur la figure 1 et située entre ses deux extrémités, à un conduit secondaire 22 d'alimentation en agent floculant.

Le conduit secondaire 22 est relié par une extrémité au conduit primaire 10 (à la jonction J) et par son autre extrémité à une cuve 50 d'agent floculant.

Afin d'assurer un écoulement contrôlé de la solution aqueuse d'agent floculant, une vanne 51, une pompe 52, un étranglement 53 et un clapet anti-retour 54 sont situés, successivement dans le sens de l'écoulement de cette solution aqueuse, entre les deux extrémités du conduit secondaire 22, comme illustré sur la figure 1. La pompe 52 peut être par exemple une pompe à vis, aussi appelée pompe à queue de cochon ou pompe PCM. Ce type de pompe présente l'avantage de ne pas ou peu cisailler l'agent floculant, ce qui permet d'éviter une détérioration de ses propriétés.

Sur le conduit primaire 10, une première vanne 60, une pompe 12, et une deuxième vanne 61 sont situées, successivement dans le sens de l'écoulement de la boue de forage coagulée, entre la cuve 14 de stockage de boue de forage coagulée et la jonction J, afin d'assurer l'écoulement contrôlé de la boue de forage coagulée vers cette jonction J. La pompe 12 peut être par exemple une pompe centrifuge.

Un mélangeur statique 24 est installé sur le conduit primaire 10, directement en aval de la jonction J, pour assurer un mélange effectif de l'agent floculant avec la boue de forage coagulée. Un étranglement 62 et une vanne 63 sont encore situés, successivement suivant le sens de l'écoulement de ce mélange, sur le conduit primaire 10, entre le mélangeur statique 24 et l'hydrocyclone 30.

Selon la disposition particulière illustrée sur la figure 1, le conduit primaire 10 peut être dépourvu de pompe en aval de la jonction J, afin d'éviter d'entraver la floculation ou détruire les flocs avant leur arrivée dans l'hydrocyclone 30. Toutefois, l'alternative est aussi envisageable. Afin d'obtenir un transport aussi rapide que possible du mélange du mélangeur 24 la longueur du conduit primaire 10 entre le mélangeur 24 et l'hydrocyclone 30 peut être inférieure à 5 mètres, voire même inférieure à 2 mètres.

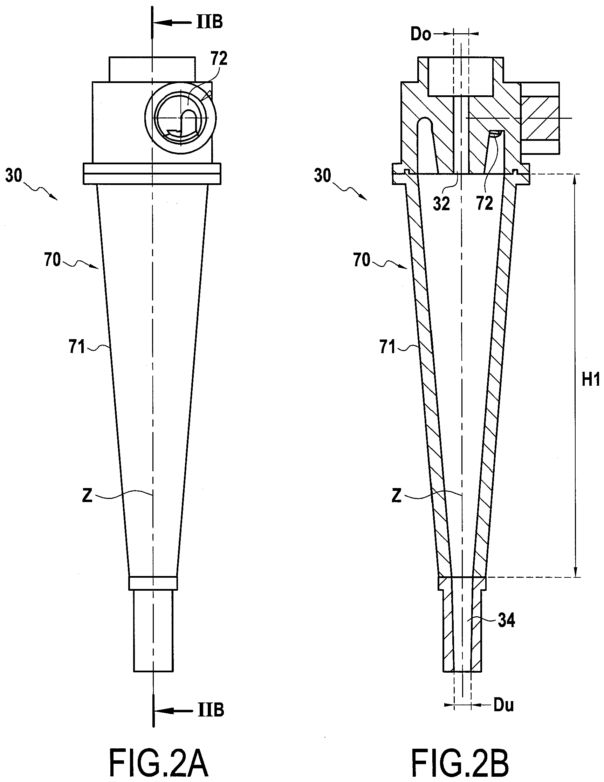

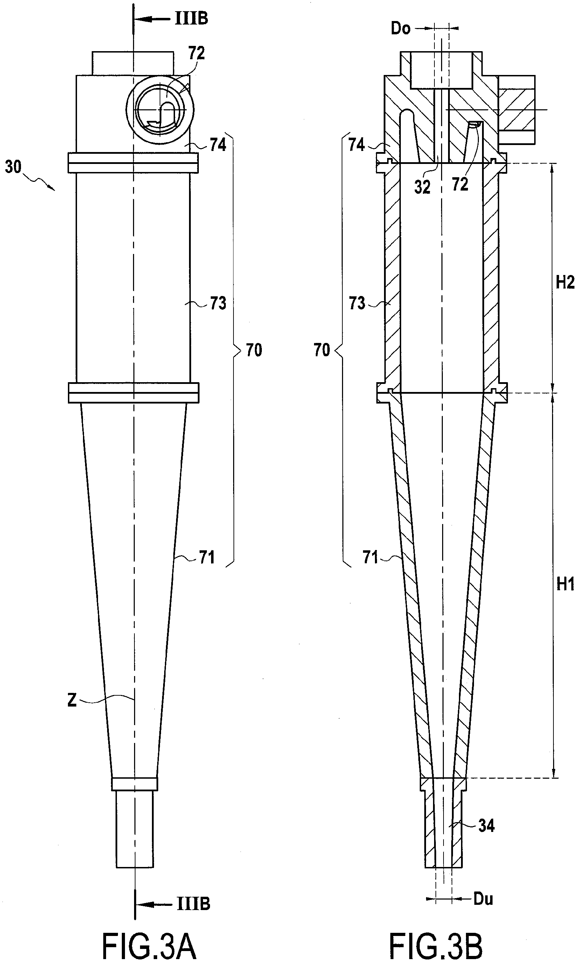

Les figures 2A, 2B et 3A, 3B illustrent en détail deux modes de réalisation alternatifs de l'hydrocyclone 30. Dans chacun des deux, l'hydrocyclone 30 comprend un corps principal 70, un conduit 72 d'alimentation tangentielle, et des orifices 32, 34 de, respectivement, surverse et sousverse. Le corps principal 70 est creux et muni d'une partie conique inversée 71 de hauteur H1. Le conduit 72 d'alimentation tangentielle, qui est connecté au conduit primaire 10, débouche à l'intérieur du corps principal 70, à proximité de son sommet, et est orienté dans un plan transversal sensiblement orthogonal à un axe central Z de la partie conique 71, décalé latéralement par rapport à cet axe central Z, de manière à donner un mouvement de rotation autour de cet axe central X au mélange de boue coagulée et d'agent floculant lors de son entrée dans le corps principal 70. Les orifices 32,34 de surverse et sousverse sont sensiblement alignés avec l'axe central Z de la partie conique 71. L'orifice 32 de surverse s'étend vers le haut depuis une embouchure à l'intérieur du corps principal 70, sous le niveau du conduit 72 d'alimentation tangentielle, et présente un diamètre de surverse Do, tandis que l'orifice 34 de sousverse s'étend vers le bas depuis l'intérieur du corps principal 70, à la pointe inférieure de la partie conique 71, et présente un diamètre de sousverse Du. Le diamètre de sousverse Du est supérieur à 1,1 fois le diamètre de surverse Do, et est compris entre 1,1 et 1,6 fois le diamètre de surverse Do.

Tandis que dans l'hydrocyclone 30 du premier mode de réalisation, illustré sur les figures 2A et 2B, et qu'on nommera Type 1, le sommet de la partie conique 71 est sensiblement au même niveau que l'embouchure de l'orifice 32 de surverse, dans l'hydrocyclone 30 du deuxième mode de réalisation, ou Type 2, illustré sur les figures 3A et 3B, le corps principal 70 comprend aussi une partie cylindrique 73, interposée entre la partie conique 71 et une partie supérieure 74, dans laquelle sont formées le conduit 72 d'alimentation tangentielle et l'orifice 32 de surverse. Cette partie cylindrique 73 présente une hauteur H2.

Retournant désormais vers la figure 1, l'orifice de surverse 32 est connecté à un conduit 80 de récupération d'un produit de traitement liquide de la boue de forage qui débouche dans un réservoir de liquide 81. L'orifice de sousverse 34 débouche au-dessus d'un plan incliné 86 versant sur une grille 82. Un entonnoir 83 de récupération d'eau libre est disposé sous la grille 82 et connecté à un conduit 84 de récupération d'eau libre, débouchant aussi dans le réservoir de liquide 81. Une pompe 85 peut être située sur ce conduit 84 de récupération d'eau libre pour assurer la circulation de l'eau libre vers le réservoir 81.

Quand l'unité de traitement de boue de forage 100 est en fonctionnement, de la boue de forage minérale liquide coagulée est extraite de la cuve 14 à travers le conduit primaire 10. Cette boue de forage minérale liquide coagulée peut être par exemple le produit d'un mélange préalable d'une boue de forage minérale liquide et d'un agent coagulant choisi parmi les sels de fers et/ou d'aluminium, ou les polymères cationiques. Ce procédé de traitement est particulièrement intéressant pour des boues de forage dégradées, avec une densité inférieure à 1,5 kg/dm³, une viscosité supérieure à 1 mPa·s et dans lesquelles au moins 80 % en poids de la fraction solide soit composée de matières inorganiques. L'agent coagulant peut notamment être du chlorure ferrique adjoint à la boue minérale liquide dans une proportion de jusqu'à 6 dm³ de solution aqueuse à 41 % volumique de chlorure ferrique par mètre cube de boue.

Le diamètre du conduit primaire 10 peut être choisi, en fonction du débit, viscosité et densité de la boue de forage minérale liquide coagulée, pour assurer un écoulement turbulent de cette boue de forage à travers le conduit primaire 10. Pour cela, le diamètre du conduit primaire 10 peut être choisi de manière à obtenir un nombre de Reynolds Re égal ou supérieur à 4000.

A partir de la jonction J et en particulier dans le mélangeur 24, la boue de forage coagulée est mélangée à de l'agent floculant en solution aqueuse extrait simultanément, à travers le conduit secondaire 22, de la cuve 50 d'agent floculant. L'agent floculant peut par exemple être choisi parmi les polyacrylamides anioniques et/ou cationiques, et particulièrement celles à haut ou très haut poids moléculaire, linéaires, ramifiées ou réticulées. Pour une polyacrylamide anionique, on entend par « haut poids moléculaire » un poids moléculaire entre 10000 et 15000 kg/mol, et par « très haut poids moléculaire » un poids moléculaire entre 15000 et 20000 kg/mol. Pour une polyacrylamide cationique, on entend par « haut poids moléculaire » un poids moléculaire entre 5000 et 10000 kg/mol, et par « très haut poids moléculaire » un poids moléculaire supérieur à 10000 kg/mol. La concentration de la solution aqueuse d'agent floculant peut être, par exemple, de 1 à 3 kg d'agent floculant par mètre cube, et elle peut être mélangée à la boue de forage en une proportion volumique allant de trois parts de boue de forage coagulée pour chaque deux parts de solution aqueuse d'agent floculant à neuf parts de boue de forage coagulée pour chaque part de solution aqueuse d'agent floculant.

En arrivant à l'hydrocyclone 30, sous l'effet de son alimentation tangentielle, le mélange de boue de forage coagulée et d'agent floculant subit un mouvement de rotation entraînant une centrifugation. Un produit de traitement solide de la boue de forage se déplace vers la paroi extérieure du corps principal 70 pour être évacué en sousverse, tandis qu'un produit de traitement liquide se concentre au centre du corps principal pour être évacué en surverse.

Le produit de traitement solide, sortant par l'orifice de sousverse 34, tombe alors sur le plan incliné 86 et jusqu'à la grille 82, qui le sépare de l'eau libre sortant aussi par l'orifice de sousverse 34. Cette eau libre est évacuée par le conduit de récupération 84 jusqu'au réservoir de liquide 81. Le produit de traitement liquide est également évacué vers le réservoir de liquide 81, à travers le conduit 80. On peut ainsi obtenir, à travers ce procédé de traitement dans l'unité de traitement 100, un produit de traitement solide, avec une siccité pouvant être supérieure à 30 %, mais surtout avec une consistance pelletable pour son envoi en décharge, à partir d'une boue de forage minérale liquide.
Le tableau suivant présente deux exemples de mise en œuvre de ce procédé, à partir de la même boue de forage minérale liquide, avec des paramètres de traitement différents et des hydrocyclones des Types 1 et 2, résultant en chaque cas en un produit de traitement solide pelletable :

| | Exemple 1 | Exemple 2 |
|---|---|---|
| Densité boue coagulée | **1,2 kg/dm³** | **1,2 kg/dm³** |
| Siccité boue coagulée | **25 %** | **25 %** |
| Coagulant | **Solution aqueuse de FeCl₃ à 41 % vol. (4 dm³ par m³ de boue de forage coagulée)** | **Solution aqueuse de FeCl₃ à 41% vol. (4 dm³ par m³ de boue de forage coagulée)** |
| Solution pour floculation | **Solution aqueuse de polyacrylamide anionique de très haut poids moléculaire et faible anionicité (2 g/l)** | **Solution aqueuse de polyacrylamide anionique de haut poids moléculaire et faible anionicité (2 g/l)** |
| Ratio vol. boue coagulée / solution floculation | **70 / 30** | **70 / 30** |
| Pression alimentation hydrocyclone | **0,2 MPa** | **0,2 MPa** |
| Débit alimentation hydrocyclone | **9,5 m³/h** | **12,5 m³/h** |
| Type hydrocyclone | **Type 1** | **Type 2** |
| Hauteur H1 | **470 mm** | **470 mm** |
| Hauteur H2 | - | **280 mm** |
| Proportion Du/Do | **1,11** | **1,11** |
| Débit sousverse | **6,4 m³/h** | **8,2 m³/h** |
| Siccité produit solide | **43 %** | **45 %** |

Dans les deux cas, le produit de traitement solide issu en sousverse de l'hydrocyclone 30, accompagné d'eau libre, ne présentera aucun écoulement gravitaire mesurable dans un essai d'écoulement au cône de Marsh, tel que défini, par exemple, dans l'API Recommended Practice 13B-2, et une cohésion supérieure à 300 Pa selon le « slump test » proposé par Baudez et al. dans l'article « Rheological interprétation of the slump test. », Applied Rheology, 12 (3), 133-141 de 2002, et cela même à partir de boues de forage homogènes et stables présentant un écoulement au cône de Marsh avec des valeurs comprises entre 32 et 180 s, une cohésion inférieure à 50 Pa.

Par contre, si par exemple la boue de forage n'est pas préalablement coagulée avant l'étape de floculation, la siccité du produit en sousverse est beaucoup moins élevée, comme l'on peut voir dans l'exemple comparatif suivant :

| | Exemple comparatif |
|---|---|
| Densité boue | **1,2 kg/dm³** |
| Siccité boue | **25 %** |
| Solution pour floculation | **Solution aqueuse de polyacrylamide anionique de haut poids moléculaire et faible anionicité (2 g/l)** |
| Ratio vol. boue / solution floculation | **66 / 34** |
| Pression alimentation hydrocyclone | **0,2 MPa** |
| Débit alimentation hydrocyclone | **10 m³/h** |
| Type hydrocyclone | **Type 2** |
| Hauteur H1 | **470 mm** |
| Hauteur H2 | **280 mm** |
| Proportion Du/Do | **1,11** |
| Siccité produit sousverse | **<20 %** |

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications.

## Revendications

1. Système de traitement d'une boue de forage, comprenant des moyens pour coaguler une boue de forage permettant d'obtenir une boue de forage coagulée, ainsi qu'une unité de traitement (100) d'une boue de forage, comprenant :
- un conduit primaire (10) d'alimentation en ladite boue de forage préalablement coagulée,
- un système de floculation en ligne (20) de la boue de forage préalablement coagulée circulant dans le conduit primaire (10), et
- au moins un hydrocyclone (30) alimenté par le conduit primaire (10) et disposé en aval du système de floculation (20), l'hydrocyclone (30) comprenant un orifice de surverse (32) destiné à recueillir un produit de traitement liquide de la boue de forage et un orifice de sousverse (34) destiné à recueillir un produit de traitement solide de la boue de forage, l'orifice de surverse (32) présentant un diamètre de surverse (Do) et l'orifice de sousverse présentant un diamètre de sousverse (Du), et le diamètre de sousverse (Du) étant supérieur au diamètre de surverse (Do), avec un rapport supérieur à 1,1, et compris entre 1,1 et 1,6, entre le diamètre de sousverse (Du) et le diamètre de surverse (Do).

2. Système de traitement selon la revendication 1, dans lequel le conduit primaire d'alimentation (10) est muni d'une pompe (12), et le système de floculation en ligne (20) comprend un conduit secondaire (22) d'alimentation en agent floculant, ledit conduit secondaire (22) étant relié au conduit primaire (10) à une jonction (J) située en aval de la pompe (12).

3. Système de traitement selon la revendication 2, dans lequel le système de floculation en ligne (20) comprend des moyens de mélange en ligne (24) de la boue de forage coagulée et de l'agent floculant, prévus sur le conduit primaire (10) en aval de la jonction (J).

4. Système de traitement selon la revendication 3, dans lequel les moyens de mélange (24) comprennent un mélangeur statique.

5. Système de traitement selon la revendication 3 ou 4, dans lequel les moyens de mélange (24) sont disposés à une distance de l'hydrocyclone (30), sur le conduit primaire (10), qui est inférieure à 5 mètres, de préférence inférieure à 2 mètres.

6. Procédé de traitement d'une boue de forage, comprenant au moins la succession d'étapes suivantes :
- on alimente un conduit primaire d'alimentation (10) en boue de forage préalablement coagulée,
- on réalise la floculation en ligne de ladite boue de forage coagulée circulant dans ledit conduit primaire (10),
- on introduit la boue de forage coagulée et floculée dans un hydrocyclone (30) comprenant un orifice de surverse (32) présentant un diamètre de surverse (Do) et un orifice de sousverse (34) présentant un diamètre de sousverse (Du), le diamètre de sousverse (Du) étant supérieur au diamètre de surverse (Do), avec un rapport supérieur à 1,1, et compris entre 1,1 et 1,6, entre le diamètre de sousverse (Du) et le diamètre de surverse (Do) ;
- on décharge un produit de traitement solide de la boue de forage au niveau de l'orifice de sousverse (34) et un produit de traitement liquide de la boue de forage au niveau de l'orifice de surverse (32).

7. Procédé de traitement selon la revendication 6, dans lequel ladite boue de forage comprend un agent stabilisateur tel que, par exemple, une argile smectique ou un polymère organique hydrosoluble.

8. Procédé de traitement selon l'une quelconque des revendications 6 ou 7, dans lequel le produit de traitement solide de la boue de forage présente une siccité supérieure à 30 %.

9. Procédé de traitement selon l'une quelconque des revendications 6 à 8, dans lequel le produit de traitement liquide de la boue de forage est de l'eau comprenant moins de 600 mg par litre de matière en suspension.

10. Procédé de traitement selon l'une quelconque des revendications 6 à 9, dans lequel l'alimentation du conduit primaire (10) en boue de forage préalablement coagulée se fait en régime turbulent.

## Patentansprüche

1. System zur Behandlung von Bohrschlamm, das Mittel zum Koagulieren von Bohrschlamm, die das Erhalten von koaguliertem Bohrschlamm ermöglichen, sowie eine Einheit zur Behandlung (100) von Bohrschlamm umfasst, umfassend:
- eine Hauptleitung (10) zur Versorgung mit dem zuvor koagulierten Bohrschlamm,
- ein In-Line-System (20) zur Flockung des vorhergehend koagulierten Bohrschlamms, der in der Hauptleitung (10) umläuft, und
- mindestens einen Hydrozyklon (30), der durch die Hauptleitung (10) versorgt wird und stromabwärts des Flockungssystems (20) angeordnet ist, wobei der Hydrozyklon (30) eine Überlauföffnung (32), die dazu bestimmt ist, ein flüssiges Behandlungsprodukt des Bohrschlamms zu sammeln, und eine Unterlauföffnung (34) umfasst, die dazu bestimmt ist, ein festes Behandlungsprodukt des Bohrschlamms zu sammeln, wobei die Überlauföffnung (32) einen Überlaufdurchmesser (Do) aufweist und die Unterlauföffnung einen Unterlaufdurchmesser (Du) aufweist, und der Unterlaufdurchmesser (Du) mit einem Verhältnis zwischen dem Unterlaufdurchmesser (Du) und dem Überlaufdurchmesser (Do), das größer als 1,1 ist und zwischen 1,1 und 1,6 beträgt, größer als der Überlaufdurchmesser (Do) ist.

2. Behandlungssystem nach Anspruch 1, wobei die Hauptversorgungsleitung (10) mit einer Pumpe (12) versehen ist und das In-Line-Flockungssystem (20) eine Nebenleitung (22) zur Versorgung mit Flockungsmittel umfasst, wobei die Nebenleitung (22) an einer Verbindung (J), die sich stromabwärts der Pumpe (12) befindet, mit der Hauptleitung (10) verbunden ist.

3. Behandlungssystem nach Anspruch 2, wobei das In-Line-Flockungssystem (20) In-Line-Mittel (24) zum Mischen des koagulierten Bohrschlamms und des Flockungsmittels umfasst, die auf der Hauptleitung (10) stromabwärts der Verbindung (J) vorgesehen sind.

4. Behandlungssystem nach Anspruch 3, wobei die Mischmittel (24) einen statischen Mischer umfassen.

5. Behandlungssystem nach Anspruch 3 oder 4, wobei die Mischmittel (24) auf der Hauptleitung (10) in einem Abstand von dem Hydrozyklon (30) angeordnet sind, der kleiner als 5 Meter, vorzugsweise kleiner als 2 Meter, ist.

6. Verfahren zur Behandlung von Bohrschlamm, das mindestens die folgende Abfolge von Schritten umfasst:
- Versorgen einer Hauptversorgungsleitung (10) mit vorhergehend koaguliertem Bohrschlamm,
- Ausführen der In-Line-Flockung des koagulierten Bohrschlamms, der in der Hauptleitung (10) umläuft,
- Einführen des koagulierten und geflockten Bohrschlamms in einen Hydrozyklon (30), der eine Überlauföffnung (32), die einen Überlaufdurchmesser (Do) aufweist, und eine Unterlauföffnung (34) umfasst, die einen Unterlaufdurchmesser (Du) aufweist, wobei der Unterlaufdurchmesser (Du) mit einem Verhältnis zwischen dem Unterlaufdurchmesser (Du) und dem Überlaufdurchmesser (Do), das größer als 1,1 ist und zwischen 1,1 und 1,6 beträgt, größer als der Überlaufdurchmesser (Do) ist,
- Ablassen eines festen Behandlungsprodukts des Bohrschlamms im Bereich der Unterlauföffnung (34) und eines flüssigen Behandlungsprodukts des Bohrschlamms im Bereich der Überlauföffnung (32).

7. Behandlungsverfahren nach Anspruch 6, wobei der Bohrschlamm ein Stabilisierungsmittel, wie beispielsweise eine Bleicherde oder ein wasserlösliches organisches Polymer, umfasst.

8. Behandlungsverfahren nach einem der Ansprüche 6 oder 7, wobei das feste Behandlungsprodukt des Bohrschlamms einen Trockengehalt von größer als 30% aufweist.

9. Behandlungsverfahren nach einem der Ansprüche 6 bis 8, wobei das flüssige Behandlungsprodukt des Bohrschlamms Wasser ist, das weniger als 600 mg Schwebstoffe pro Liter umfasst.

10. Behandlungsverfahren nach einem der Ansprüche 6 bis 9, wobei die Versorgung der Hauptleitung (10) mit vorhergehend koaguliertem Bohrschlamm im turbulenten Bereich erfolgt.

## Claims

1. A drilling mud treatment system, comprising means for coagulating drilling mud to obtain a coagulated drilling mud, as well as a drilling mud treatment unit (100) comprising:
- a primary duct (10) for feeding said previously coagulated drilling mud;
- an in-line flocculation system (20) for flocculating the previously coagulated drilling mud flowing in the primary duct (10); and
- at least one hydrocyclone (30) fed by the primary duct (10) and arranged downstream from the flocculation system (20), the hydrocyclone (30) having an overflow orifice (32) for receiving a liquid product resulting from treatment of the drilling mud and an underflow orifice (34) for receiving a solid product resulting from treatment of the drilling mud, the overflow orifice (32) presenting an overflow diameter (Do) and the underflow orifice presenting an underflow diameter (Du), and the underflow diameter (Du) being greater than the overflow diameter (Do), with a ratio greater than 1.1 between the underflow diameter (Du) and the overflow diameter (Do).

2. A treatment unit (100) according to claim 1, wherein the primary feed duct (10) is provided with a pump (12), and the in-line flocculation system (20) includes a secondary duct (22) for feeding flocculating agent, said secondary duct (22) being connected to the primary duct (10) at a junction (J) situated downstream from the pump (12) .

3. A treatment unit (100) according to claim 2, wherein the in-line flocculation system (20) comprises in-line mixer means (24) for mixing the coagulated drilling mud and the flocculating agent, said means being provided in the primary duct (10) downstream from the junction (J).

4. A treatment unit (100) according to claim 3, wherein the mixer means (24) comprise a static mixer.

5. A treatment unit (100) according to claim 3 or claim 4, wherein the mixer means (24) are arranged at a distance from the hydrocyclone (30), in the primary duct (10), that is shorter than 5 m, preferably shorter than 2 m.

6. A treatment method for treating drilling mud, the method comprising at least the following succession of steps:
- feeding a primary feed duct (10) with previously coagulated drilling mud;
- flocculating said coagulated drilling mud in-line while it is flowing in said primary duct (10);
- introducing the coagulated and flocculated drilling mud into a hydrocyclone (30) having an overflow orifice (32) presenting an overflow diameter (Do), and an underflow orifice (34) presenting an underflow diameter (Du), the underflow diameter (Du) being greater than the overflow diameter (Do), with a ratio greater than 1.1 between the underflow diameter (Du) and the overflow diameter (Do); and
- discharging a solid product resulting from treatment of the drilling mud via the underflow orifice (34), and a liquid product resulting from treatment of the drilling mud via an overflow orifice (32).

7. A treatment method according to claim 6, wherein said drilling mud includes a stabilizing agent such as, for example, smectic clay or a hydrosoluble organic polymer.

8. A treatment method according to claim 6 or claim 7, wherein the solid product of treating the drilling mud presents dryness greater than 30%.

9. A treatment method according to any one of claims 6 to 8, wherein the liquid product of treating the drilling mud is water containing less than 600 milligrams per liter of matter in suspension.

10. A treatment method according to any one of claims 6 to 9, wherein the primary duct (10) is fed with previously coagulated drilling mud under turbulent conditions.
